# EUROPÄISCHE PATENTSCHRIFT

(11) **EP 2 771 089 B1**
(45) Veröffentlichungstag und Bekanntmachung des Hinweises auf die Patenterteilung: **12.08.2015**
(21) Anmeldenummer: 12768839.8
(22) Anmeldetag: 05.10.2012
(51) Int. Cl.: B01D 27/08, B01D 46/00

(54) **HERSTELLUNGSVERFAHREN FÜR EINE FITLEREINRICHTUNG**
PRODUCTION PROCESS FOR FILTER APPLIANCE
PROCÉDÉ DE FABRICATION D'UN DISPOSITIF DE FILTRATION

(30) Priorität: 28.10.2011 DE 102011085446
(43) Veröffentlichungstag der Anmeldung: 03.09.2014
(73) Patentinhaber: Mahle International GmbH, 70376 Stuttgart (DE)
(72) Erfinder: MOHR, Uwe, 70376 Stuttgart (DE)
(74) Vertreter: BRP Renaud & Partner mbB Rechtsanwälte Patentanwälte Steuerberater
(86) Internationale Anmeldenummer: PCT/EP2012/069685
(87) Internationale Veröffentlichungsnummer: WO 2013/060562

(56) Entgegenhaltungen:
- EP-A2- 2 039 542
- DE-A1-102005 006 880
- DE-U1- 29 709 768
- DE-U1-202006 017 226
- US-A- 4 826 517
- US-A- 4 929 263
- US-A- 5 693 108

## Beschreibung

Die vorliegende Erfindung betrifft ein Verfahren zur Herstellung einer Filtereinrichtung mit einem Gehäuse und einem Filterelement sowie eine derartige Filtereinrichtung.

Eine Filtereinrichtung wird in zahlreichen Anwendungen zum Reinigen von Fluiden benutzt und ist hinlänglich bekannt. Zum Reinigen wird das Fluid beispielweise von Schmutzpartikeln befreit. Hierzu strömt das Fluid durch eine Strömungsöffnung bzw. einen Einlass eines Gehäuses der Filtereinrichtung in die Filtereinrichtung hinein. Im Gehäuse ist ein Filterelement angeordnet, welches vom Fluid durchströmt wird, wobei das Filterelement das Fluid beispielsweise von Schmutzpartikeln befreit und somit reinigt. Anschließend strömt das gereinigte Fluid durch eine andere Strömungsöffnung bzw. einen Auslass wieder aus dem Gehäuse hinaus. Das Gehäuse und das Filterelement der Filtereinrichtung werden üblicherweise separat produziert und anschließend zusammengesetzt bzw. montiert. Auch gibt es Verfahren zur Herstellung einer derartigen Filtereinrichtungen, bei denen das Gehäuse durch Blasformen hergestellt wird und das Filterelement während des Blasformens mit dem Gehäuse verbunden wird bzw. an diesem endfixiert wird.

Derartige Filtereinrichtungen sind beispielsweise aus der DE 43 15 838 A1, der US 4,929,263 sowie aus der WO 2009/019212 A1 bekannt.

Die vorliegende Erfindung beschäftigt sich mit dem Problem, für ein Verfahren zur Herstellung einer Filtereinrichtung der eingangs genannten Art eine verbesserte oder zumindest alternative Ausführungsform anzugeben, die sich insbesondere durch eine kostengünstige Produktion auszeichnet.

Dieses Problem wird durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Filterelement einer Filtereinrichtung während nach der Herstellung eines Gehäuses der Filtereinrichtung im Gehäuse anzuordnen und das Gehäuse derart auszubilden, dass das Filterelement nicht mehr als Ganzes aus dem Gehäuse herausnehmbar ist. Das Gehäuse wird dabei einteilig, also monolithisch, hergestellt und das Filterelement während oder nach der Herstellung zumindest zeitweise am Gehäuse festgelegt. Das Gehäuse weist weiter Öffnungen auf, die insbesondere dem Einströmen bzw. Ausströmen eines durch die Filtereinrichtung zu filternden Fluides dienen können. Die Öffnungen sind erfindungsgemäß derart dimensioniert, dass das Filterelement nach dem Abschluss des erfindungsgemäßen Verfahrens zur Herstellung der Filtereinrichtung nicht als Ganzes durch die Öffnungen hindurch passt. Somit entfällt ein späteres und in einem separaten Produktionsschritt zu erfolgendes Zusammenbauen des Filterelements und des Gehäuses bzw. Montieren des Filterelements in das Gehäuse und der Produktionsaufwand zur Herstellung der Filtereinrichtung sowie die Produktionskosten können gesenkt werden.

Das Filterelement kann von beliebiger Art sein. Das Filterelement ist beispielsweise plissiert und aus einem entsprechenden Material, z.B. einem Gewebe aus Natur- oder Kunstfasern, Polymer-Vlies, Zellulose oder einem Zellulose/Kunstfasermix, hergestellt. Auch kann das Filterelement als Aktivkohlefilter ausgebildet bzw. ausgestattet sein. Das Filterelement dient dem Zweck, das zu reinigende bzw. zu filternde Fluid von Schmutzpartikel zu befreien.

Diese Schmutzpartikel können etwa Staub, Metalle oder auch andere im Fluid unerwünschte Bestandteile, beispielsweise Chemikalien und/oder Gerüche, sein.

Das zu filternde bzw. zu reinigende Fluid kann im gasförmigen bzw. flüssigem Aggregatzustand vorliegen. Handelt es sich beim Fluid um ein Gas, so kann die Filtereinrichtung insbesondere als Luftfilter ausgebildet sein. Ist das Fluid flüssig, ist die Filtereinrichtung insbesondere als Ölfilter, Kraftstofffilter oder Wasserfilter ausgebildet.

Bei einer bevorzugten Ausführungsform wird das Gehäuse mittels Blasformen hergestellt. Hierzu wird das Gehäuse zunächst aus einem Rohling in eine Vorform geformt. Die Vorform des Gehäuses bzw. des Rohlings weist zweckmäßig eine Blasformöffnung auf, durch welche ein Blasformmedium zum Formen des Rohlings in den Rohling eingebracht wird. Zudem weist das in Vorform vorliegende Gehäuse eine Einsetzöffnung auf, durch welche das Filterelement in einem nächsten Schritt ins Gehäuse eingesetzt bzw. eingebracht wird. Ist das Filterelement im die Vorform aufweisenden Gehäuse angeordnet und hinreichend festgelegt, so wird das Gehäuse mittels Blasformen in eine Endform geformt, wobei die Endform insbesondere der endgültigen Form des Gehäuses entspricht. Hierbei wird das Blasmedium durch die besagte Blasformöffnung ins Gehäuse gebracht. Es ist auch vorstellbar, das Blasmedium zum Endformen, das heißt zur Herstellung der Endform des Gehäuses, durch eine andere Blasformöffnung in das Gehäuse einzubringen, Auch kann die Endform durch das Umformen eines Teils des Gehäuses hergestellt werden. Festlegen bedeutet hier insbesondere, dass das Filterelement von außen festgehalten werden kann. Das die Endform aufweisende Gehäuse ist dann derart ausgebildet, dass das Filterelement nicht als Ganzes, das heißt am Stück, aus dem Gehäuse herausnehmbar ist. Hierzu wird insbesondere die Einsatzöffnung beim Endformen des Gehäuses entsprechend verkleinert.

Alternativ kann die Einsetzöffnung beim Endformen des Gehäuses gänzlich geschlossen werden, so dass das Gehäuse keine derartige Öffnung mehr aufweist. Entsprechendes gilt für die Blasformöffnung bzw. für die Blasformöffnungen und etwaige andere Öffnungen des Gehäuses. Bevorzugt ist dabei ein Verfahren, bei dem das Blasformmedium beim Vorformen, das heißt bei der Herstellung der Vorform des Gehäuses, und beim Endformen durch die gleiche Blasformöffnung erfolgt.

Als Blasformmedium kann insbesondere ein Gas zum Einsatz kommen, wobei das Gas vorzugsweise Luft sein kann. Das Blasformen kann durch eine entsprechende Blasformeinrichtung erfolgen, wobei das Blasformmedium mittels der Blasformeinrichtung durch die entsprechende Blasformöffnung in das Gehäuse eingebracht werden kann.

Alternativ ist es vorstellbar, das Filterelement durch eine der Blasformöffnungen in das die Vorform aufweisende Gehäuse einzusetzen. Folglich ist es möglich, das Gehäuse der Filtereinrichtung aus dem Rohling mittels Blasformen in die Vorform zu formen, wobei das Blasformmedium durch eine erste Blasformöffnung in den Rohling eingebracht wird. Anschließend wird das Filterelement durch diese erste Blasformöffnung hindurch in das die Vorform aufweisende Gehäuse eingesetzt und hinreichend festgelegt. Danach wird das Gehäuse mittels Blasformen in die Endform geformt, wobei das Blasmedium durch eine zweite Blasformöffnung in das Gehäuse eingebracht wird. Beim Endformen wird die erste Blasformöffnung zweckmäßig soweit verkleinert, dass das Filterelement nicht mehr als Ganzes durch die erste Blasformöffnung hindurch passt bzw. die erste Blasformöffnung, die zuvor als Einsetzöffnung diente, wird geschlossen. Zudem ist die zweite Blasformöffnung ebenfalls derart dimensioniert, dass das Filterelement als Ganzes nicht durch die zweite Blasformöffnung hindurch passt.

Bei einer weiteren Alternative wird das Filterelement in komprimierter Form, d.h. mit verringerten Abmaßen, in das Gehäuse eingeführt. Das Komprimieren des Filterelementes bzw. die Fixierung der komprimierten Form des Filterelementes erfolgt durch ein Hilfsmittel. Dieses Hilfsmittel kann z.B. ein Werkzeug, insbesondere eine Zange, sein, welches das Filterelement komprimiert. Alternativ kann das Hilfsmittel auch ein gesondertes Bauteil, wie z. B. eine Schnur, ein Band, ein Schlauch oder eine Folie sein, welches die komprimierte Form des Filterelementes fixiert. Das so fixierte Filterelement kann dann in das die Vorform aufweisende Gehäuse eingebracht und in der erforderlichen Position gehalten werden. Nach dem endgültigen Positionieren des Filterelements wird die Komprimierung des Filterelementes aufgelöst, indem das Hilfsmittel entfernt bzw. gelöst wird. Hierzu kann das Werkzeug geöffnet bzw. das Bauteil entfernt werden. Das komprimierte Filterelement entfaltet sich dann in die eigentliche Filterelementform. Dies kann durch eine materialbedingte elastische Rückverformung des Materials erfolgen. Bei anderen Ausgestaltungen kann die Entfaltung des Filterelementes durch eine Krafteinwirkung von außen erfolgen. Hierbei kann beispielsweise ein im Filterelement enthaltener Entfaltungsmechanismus betätigt, das Filterelement durch mechanische Einwirkung in die entsprechende Ausdehnung gebracht, oder durch ein auf das Filterelement einwirkendes Druckfluid zur Ausdehnung gebracht werden. Dieses expandierte Filterelement wird dann in der erforderlichen Position im Gehäuse endfixiert. Diese Fixierung beispielsweise durch die elastischen Eigenschaften des Filterelementes selbst erreicht werden.

Zum Endformen des Gehäuses ist es vorteilhaft, wenn das Filterelement relativ zum Gehäuse eine im Wesentlichen feste Position aufweist. Dies erfolgt durch das Festlegen des Filterelements. Dementsprechend kann das Filterelement zudem oder alternativ vor dem Endformen des Gehäuses an dem Gehäuse vorfixiert werden. Alternativ oder zusätzlich kann das Filterelement nach dem Endformen des Gehäuses an diesem endfixiert werden. Nach dem Endfixieren des Filterelements im Gehäuse ist somit eine zweckmäßige feste Position des Filterelements im Gehäuse gegeben.

Bei einer weiteren bevorzugten Ausführungsform wird das Filterelement ins Gehäuse eingebracht und festgelegt. Im Anschluss an das Endformen des Gehäuses wird das Filterelement in Position gebracht und endfixiert. Das heißt, dass das Filterelement in dem die Endform aufweisenden Gehäuse von der Festlegung gelöst und in diejenige Position gebracht wird, in der das Filterelement bei der fertig hergestellten Filtereinrichtung angeordnet ist. Danach erfolgt die Endfixierung und somit beispielsweise die Verbindung zwischen dem Filterelement und dem Gehäuse. Weist das Gehäuse während der Herstellung, insbesondere dem Endformen, eine erhöhte Temperatur auf, so hat diese Ausführungsform den Vorteil, dass das Filterelement das Gehäuse nach dem Endformen und somit insbesondere nach dem Abkühlen kontaktieren kann. Zudem kann das Filterelement während des Endformens bewegt werden, um beispielsweise eine verbesserte Strömung des Blasmediums zu erlauben oder diesem auszuweichen.

Die Fixierung des Filterelements am Gehäuse kann auf beliebige Art realisiert werden. Das Filterelement kann beispielsweise mit dem Gehäuse verklebt, verschweißt oder verlötet werden. Vorstellbar ist auch eine Fixierung, die mittels Formschluss realisiert ist. Auch sind Ausführungsformen vorstellbar, bei denen die Fixierung durch eine beliebige Kombination aus den genannten Möglichkeiten und anderen Fixierungsarten realisiert ist. Weiter kann bei der Vorfixierung eine andere Art des Fixierens gewählt werden als beim Endfixieren.

Das formschlüssige Fixieren des Filterelements am Gehäuse wird insbesondere durch komplementär ausgebildete Bereiche des Filterelements und des Gehäuses realisiert. Das Filterelement weist beispielsweise Vorsprünge und/oder Aufnahmen auf, die in Aufnahmen des Gehäuses eingreifen und/oder in die Vorsprünge des Gehäuses eingreifen. Auch kann das Filterelement derart ausgebildet sein, dass es als Ganzes oder teilweise, beispielsweise mittels eines Rahmens des Filterelements, in zumindest eine Aufnahme des Gehäuses angeordnet wird und mit der zumindest einen Aufnahme zusammenwirkt, um eine formschlüssige Fixierung zu realisieren.

Alternativ oder zusätzlich kann das Filterelement mit Hilfe eines Fixiermittels am/im Gehäuse fixiert werden. Bevorzugt ist eine Ausführungsform, bei der das Filterelement mittels Einspritzen eines derartigen Fixiermittels im/am Gehäuse fixiert wird. Das Fixiermittel kann zudem dem Zweck dienen, eine Abdichtung in dem entsprechendem Bereich, also insbesondere zwischen dem Rahmen des Filterelements und dem Gehäuse, zu gewährleisten, um eine Rohseite der Filereinrichtung von einer Reinseite der Filtereinrichtung dicht zu trennen. Die Rohseite ist die dem Einlass zugeordnete Seite, der Filtereinrichtung, während die Reinseite, die dem Auslass zugeordnete Seite der Filtereinrichtung ist.

Bevorzugt ist eine Ausführungsform, bei dem das Fixiermittel ein Schaum ist. Demnach wird das Fixiermittel mit Hilfe eines Schäumverfahrens in das Gehäuse eingespritzt. Der Schaum kann sich abhängig vom jeweiligen Fixiermittel vor, während sowie nach dem Einspritzen bilden. Hierbei ist es beispielsweise möglich, das Fixiermittel zwischen dem Gehäuse und dem Filterelement einzuspritzen. Insbesondere ist es vorstellbar, das Fixiermittel zwischen dem Rahmen des Filterelements und dem Gehäuse einzuspritzen. Handelt es sich bei dem Rahmen beispielsweise um einen Vliesstoff bzw. ein Vlies, kann das Fixiermittel auch in das Vlies eingespritzt, insbesondere geschäumt, werden.

Das Einspritzen des Fixiermittels kann durch eine der genannten Öffnungen, also insbesondere durch die Blasformöffnung, erfolgen. Das Einspritzen des Fixiermittels kann jedoch auch durch wenigstens eine separate für das Einspritzen vorgesehene Einspritzöffnung erfolgen. Die Einspritzöffnungen werden nach dem Einspritzen vorzugsweise durch das Fixiermittel abgedichtet bzw. geschlossen.

Gemäß einer weiteren Ausführungsform wird das Filterelement unlösbar am Gehäuse fixiert, insbesondere endfixiert. Das heißt, dass das Filterelement weder aus einer der vorhandenen Öffnungen des Gehäuses herausnehmbar ist, noch kann es nach einem Öffnen des Gehäuses als Ganzes von diesem gelöst werden. Dies hat insbesondere zur Folge, dass die Filtereinrichtung bei Bedarf als Ganzes auszutauschen ist.

Bei einer anderen bevorzugten Ausführungsform wird das Filterelement lösbar am Gehäuse fixiert, insbesondere endfixiert. Somit ist es möglich das Filterelement bei Bedarf, beispielsweise durch ein Öffnen bzw. Brechen des Gehäuses herauszunehmen und insbesondere auszutauschen. Hierzu wird das Gehäuse entsprechend ausgebildet bzw. geformt. Insbesondere kann das Gehäuse so ausgebildet bzw. ausgestattet werden, dass es geöffnet bzw. geteilt werden kann.

Das Gehäuse der Filtereinrichtung kann im Allgemeinen aus einem beliebigen Material hergestellt sein. Bevorzugt sind jedoch solche Materialien, die kostengünstig herzustellen und/oder zu verarbeiten sind. Folglich wird das Gehäuse bei einer bevorzugten Ausführungsform aus einem Kunststoff hergestellt. Das heißt insbesondere, dass der Rohling ein Kunststoff ist. Als Beispiel für einen geeigneten Kunststoff sei auf Polypropylen hingewiesen. Durch die Verwendung des Kunststoffs zur Herstellung des Gehäuses kann die Produktion der Filtereinrichtung zusätzlich vereinfacht und zudem kostengünstig realisiert werden.

Gemäß einer weiteren bevorzugten Ausführungsform wird das Gehäuse zu einer symmetrischen Vorform und/oder Endform geformt. Bevorzugt sind dabei rotationssymmetrische Formen, die die Herstellung des Gehäuses mittels Blasformen vereinfachen.

Bei einer weiteren bevorzugten Ausführungsform werden beim Blasformen des Gehäuses auch andere Bestandteile des Gehäuses geformt. Dies gilt zweckmäßig für das Endformen des Gehäuses. Beispielsweise ist es vorstellbar, Strömungsöffnungen des Gehäuses beim Blasformen mitzuformen, wobei das Gehäuse gewöhnlich zwei solche Strömungsöffnungen aufweist. Insbesondere kann die zumindest eine Blasformöffnung als eine Strömungsöffnung, also ein Einlass bzw. ein Auslass, dienen. Weiter kann die zumindest eine Einspritzöffnung ebenfalls beim Blasformen geformt werden. Zudem ist es vorteilhaft, beim Blasformen Rippen des Gehäuses zu formen, die der Stabilisierung des Gehäuses dienen. Weiter können Aufnahmen bzw. Vorsprünge des Gehäuse, die insbesondere mit dem Filterelement zusammenwirken, um dieses zu fixieren, beim Blasformen geformt werden.

Um ein vereinfachtes Öffnen des Gehäuses zu ermöglichen, wird bei einer weiteren bevorzugten Ausführungsform eine Sollbruchfunktion in das Gehäuse eingearbeitet bzw. wird das Gehäuse mit der Sollbruchfunktion ausgestattet. Die Sollbruchfunktion ermöglicht einen Bruch des Gehäuses an/entlang einer Sollbruchstelle, wobei der Bruch mit Hilfe einer mechanischen Einwirkung erfolgt. Die Öffnung des Gehäuses ist demnach insbesondere durch einen Bruch des Gehäuses an bzw. entlang der Sollbruchstelle realisiert. Die Sollbruchfunktion wird während dem Vorformen und/oder dem Endformen und/oder im Anschluss an das Endformen an bzw. am Gehäuse eingearbeitet. Insbesondere kann die Sollbruchfunktion ein Sollbruchelement aufweisen bzw. kann ein Sollbruchelement vorgesehen sein, welches die Sollbruchstelle freigibt und/oder den Bruch und somit die Sollbruchfunktion aktiviert.

Das Sollbruchelement kann ebenfalls während dem Vorformen und/oder dem Endformen und/oder nach dem Endformen in/am Gehäuse geformt und/oder eingearbeitet und/oder angebracht werden. Das Sollbruchelement dient dabei dem Zweck, eine Sollbruchstelle zu schaffen bzw. diese zu aktivieren. Die mechanische Einwirkung kann beispielsweise durch einen Zusammenprall mit der Filtereinrichtung bzw. durch einen Unfall verursacht sein, wobei der Bruch des Gehäuses einen reduzierten verursachten Schaden bewirken kann.

Die mechanische Einwirkung kann durch eine mechanische Betätigung erfolgen, welche zum Beispiel ein entsprechendes Werkzeug oder eine entsprechende Einrichtung, beispielsweise eine Maschine, und/oder das Sollbruchelement verursacht. Auch kann die mechanische Einwirkung direkt durch eine Person erfolgen, die das Gehäuse bzw. die Filtereinrichtung verdreht und/oder presst und/oder auseinanderzieht. Weiter wird die mechanische Einwirkung und dementsprechend der Bruch an/entlang der Sollbruchstelle etwa durch eine impulsartige Krafteinwirkung in diesem Bereich, beispielsweise einen Schlag auf die Filtereinrichtung, insbesondere auf das Gehäuses, zum Beispiel auf/gegen eine Kante bewirkt.

Die Sollbruchfunktion ist auf beliebige Art realisiert und in oder am Gehäuse ausgeformt oder ausgebildet. Die Sollbruchfunktion kann etwa eine Abschwächung des Gehäuses, insbesondere eine reduzierte Wandstärke des Gehäuses, sein, die den Bruch an der Sollbruchstelle bewirkt. Insbesondere können die Sollbruchfunktion und/oder das Sollbruchelement und/oder die Sollbruchstelle einander entsprechen.

Bei einer weiteren Variante ist die Sollbruchfunktion als eine oder mehrere Ausnehmung am Gehäuse realisiert. Weist die Sollbruchfunktion mehrere Ausnehmungen auf, so können diese einander benachbart angeordnet sein und somit die Sollbruchstelle vorgeben. Bevorzugt ist eine Ausführungsform, bei der die Sollbruchfunktion zumindest eine Kerbe umfasst. Die Kerbe wird vorzugsweise an einer Außenseite des Gehäuses ausgeformt bzw. ausgebildet. In jedem Fall sind die jeweiligen Ausnehmungen bzw. Kerben derart hergestellt, dass das Gehäuse nach außen dicht ist und die Abdichtung der Reinseite und der Rohseite der Filtereinrichtung gewährleistet ist. Hierzu können die jeweiligen Ausnehmungen bzw. Kerben mit einem entsprechenden Füllmittel gefüllt sein.

Die Sollbruchfunktion und/oder das Sollbruchelement und/oder die Sollbruchstelle verlaufen bevorzugt entlang der Umfangsrichtung des Gehäuses, wobei sie das Gehäuse nicht zwangsläufig gänzlich umschließen bzw. entlang der gesamten Umfangsrichtung verlaufen.

Entsprechend einer weiteren bevorzugten Ausführungsform wird die Sollbruchfunktion derart in das Gehäuse eingearbeitet, bzw. ausgeformt, dass die Sollbruchstelle vom Filterelement beabstandet ist. Insbesondere ist die Sollbruchstelle entlang einer Querrichtung vom Filterelement beabstandet. Somit ist es möglich das Gehäuse aufzubrechen, ohne das Filterelement zu beschädigen bzw. ohne dass das Filterelement dem Bruch des Gehäuses entgegenwirkt.

Gemäß einer weiteren bevorzugten Ausführungsform ist die Sollbruchfunktion derart eingearbeitet bzw. ausgeformt, dass das Filterelement nach dem Bruch des Gehäuses aus dem Gehäuse lösbar ist. Zusätzlich kann die Sollbruchstelle eine Beseitigung der Endfixierung bewirken oder diese zumindest abschwächen. Alternativ oder zusätzlich kann die Sollbruchstelle die Verbindung zwischen dem Gehäuse und dem Filterelement aufbrechen bzw. abschwächen. Somit ist es insbesondere möglich das Filterelement und das Gehäuse oder durch den Bruch entstandene Gehäuseteile getrennt zu entsorgen.

Bei einer vorteilhaften Weiterbildung wird das Gehäuse derart hergestellt, dass die durch den Bruch an der Sollbruchstelle gebildeten Gehäuseteile, insbesondere Gehäusehälften, ineinander steckbar sind. Das heißt, dass zumindest ein Gehäuseteil in den anderen gesteckt werden kann, wenn das Gehäuse an der Sollbruchstelle gebrochen ist. Hierzu wird das Gehäuse vorzugsweise symmetrisch, insbesondere rotationssymmetrisch hergestellt, so dass die Gehäuseteile, insbesondere Gehäusehälften, komplementär geformt sind. Bevorzugt sind die Strömungsöffnungen des Gehäuses an unterschiedlichen Seiten des Filterelements und insbesondere gegenüberliegend angeordnet. So sind die Strömungsöffnungen insbesondere an entlang der Querrichtung gegenüberliegenden Seiten des Gehäuses angeordnet und erstrecken sich entlang der Querrichtung entgegengesetzt. Verläuft die Sollbruchstelle zwischen den Strömungsöffnungen und insbesondere senkrecht zur Querrichtung, so kann die eine Gehäusehälfte mit der einen Strömungsöffnung in die andere Gehäusehälfte mit der anderen Strömungsöffnung gesteckt werden, wobei die eine Strömungsöffnung bevorzugt in die andere Strömungsöffnung gesteckt ist. Hierzu weist die eine Strömungsöffnung insbesondere einen kleineren Außendurchmesser auf als die andere Strömungsöffnung. Damit wird insbesondere das anfallende Abfallvolumen erheblich reduziert.

Die mechanische Einwirkung erfolgt bei einer weiteren bevorzugten Ausführungsform mit Hilfe eines Bandes. Das Band kann dabei Bestandteil des Sollbruchelements sein oder diesem entsprechen. Das Band ist beispielsweise in der Kerbe bzw. in den Kerben angeordnet und bewirkt durch ein Ziehen den Bruch des Gehäuses an der Sollbruchstelle oder aktiviert die Sollbruchstelle, indem es die Sollbruchstelle freigibt. Dabei verläuft das Band nicht zwingend entlang der gesamten Sollbruchstelle, insbesondere der Ausnehmung und/oder der Kerbe. Insbesondere ist es möglich das Band von außen unsichtbar anzubringen und es beispielsweise mit einem Abdeckmittel, etwa Fügemittel, Silikon und dergleichen, zumindest teilweise nach außen abzudecken. Zur mechanischen Einwirkung wird das Band beispielsweise an einem Ende gezogen. Demensprechend kann das Band als eine Verstärkung der durch die Ausnehmung bzw. Kerbe abgeschwächten Gehäusewand bzw. des entsprechenden Abschnitts dienen, die durch ein zumindest teilweises Herauslösen des Bandes ein Bruch an der Sollbruchstelle bewirkt oder ermöglicht. Mit anderen Worten, das Band aktiviert die Sollbruchstelle. Das heißt, dass der Bruch an der Sollbruchstelle etwa nach dem Lösen des Bandes vom Gehäuse durch eine weitere mechanische Einwirkung erfolgen kann.

Das Band ist dementsprechend an einem Ende greifbar, so dass es durch ein entsprechendes Werkzeug oder mit der Hand vom Gehäuse gelöst werden kann. Dieses Ende ist von der Außenseite und/oder von der Innenseite des Gehäuses greifbar.

Alternativ oder zusätzlich ist es vorstellbar das Band derart auszustatten bzw. auszubilden, dass es sich ohne mechanische Einwirkung vom Gehäuse lösen kann. Das Band kann sich dementsprechend nach einer vorgegebenen Zeit zersetzen und/oder durch eine chemische Reaktion vom Gehäuse gelöst werden und sich insbesondere zersetzen.

Das Band weist zudem eine beliebige Form auf und ist aus einem beliebigen Material hergestellt. Exemplarisch wird hier auf runde und eckige Bänder hingewiesen, die aus Kunststoff und/oder einem metallischen Werkstoff hergestellt sind. Insbesondere kann das Band ein vom Kunststoff überzogener Draht sein, wobei der Kunststoff einerseits die Farbe des Gehäuses aufweisen kann, um einen optisch glatten Eindruck des Gehäuses zu bewirken und andererseits zum Abdichten von entsprechenden Stellen, insbesondere der Einspritzöffnungen, dienen kann. Alternativ kann das Band auch von einem anderen Material, beispielsweise durch eine Kunststoffhaut bzw. Kunststoffschicht, nach außen abgedeckt sein.

Es versteht sich, dass eine Filtereinrichtung mit einem Filterelement und einem insbesondere blasgeformten Gehäuse, welches Öffnungen aufweist, die derart dimensioniert sind, dass das Filterelement nicht als Ganzes aus dem Gehäuse herausnehmbar ist, auch als Solche zum Umfang dieser Erfindung gehört. Die Filtereinrichtung ist dabei vorzugsweise gemäß einem Verfahren der besagten Art hergestellt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Schnitt durch eine Filtereinrichtung mit einem eine Vorform aufweisenden Gehäuse,
- Fig. 2: einen Schnitt durch die Filtereinrichtung mit dem eine Endform aufweisenden Gehäuse,
- Fig. 3: einen Schnitt durch eine Filtereinrichtung anderer Ausführungsform,
- Fig. 4: eine Außenansicht der Filtereinrichtung,
- Fig. 5: eine Ansicht der Filtereinrichtung nach einem Bruch an einer Sollbruchstelle.

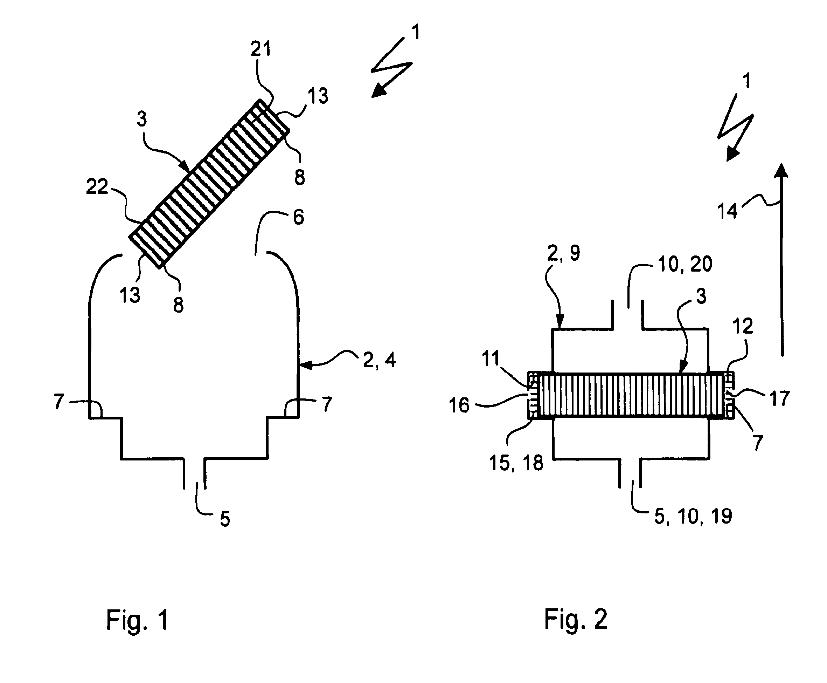

Entsprechend den Fig. 1 bis 5 weist eine Filtereinrichtung 1 ein Gehäuse 2 und ein Filterelement 3 auf. In Fig. 1 ist ein Zustand der Filtereinrichtung 1 dargestellt, bei dem das Gehäuse 2 eine Vorform 4 aufweist. Das die Vorform 4 aufweisende Gehäuse 2 ist insbesondere mittels Blasformen aus einem Rohling in die, zum Beispiel rotationssymmetrische, Vorform 4 geformt. Hierzu wird ein Blasformmedium durch eine Blasformöffnung 5 in den Rohling eingebracht, bis der Rohling die gewünschte Vorform 4 aufweist. In dieser Form weist das Gehäuse 2 zudem eine Einsetzöffnung 6 auf. Die Einsetzöffnung 6 dient dem Zweck, das Filterelement 3 in das die Vorform 4 aufweisende Gehäuse 2 einzusetzen. Die Vorform 4 weist in seinem der Blasformöffnung 5 zugewandten inneren Bereich an gegenüberliegenden Enden jeweils eine Stufe 7 auf. Das Filterelement 3 wird durch die Einsetzöffnung 6 in das die Vorform 4 aufweisende Gehäuse 2 eingeführt. Das Filterelement 3 ist beispielsweise quaderartig ausgebildet und derart dimensioniert, dass gegenüberliegende Ecken 8 bzw. Randbereiche des Filterelements 3 auf den Stufen 7 des Gehäuses 2 angeordnet werden können. Somit ist das Filterelement 3 am die Vorform 4 aufweisenden Gehäuse 2 festgelegt.

Anschließend wird das Gehäuse 2 mittels Blasformen in eine in Fig. 2 gezeigte Endform 9 geformt. Das die Endform 9 aufweisende Gehäuse 2 ist z.B. rotationssymmetrisch ausgebildet. Beim Endformen des Gehäuses 2 wird die Einsetzöffnung 6 soweit verkleinert, dass das Filterelement 3 als Ganzes nicht mehr aus dem die Endform 9 aufweisenden Gehäuse 2 herausnehmbar ist. Bei der in Fig. 2 gezeigten Ausführungsform wird die Einsetzöffnung 6 zu einer Strömungsöffnung 10 geformt, welche die gleiche Größe und Ausbildung aufweist wie die Blasformöffnung 5. Folglich kann auch die Blasformöffnung 5 nach dem Endformen des Gehäuses 2 als Strömungsöffnung 10 fungieren.

Die Endform 9 des Gehäuses 2 weist weitere, den besagten Stufen 7 gegenüberliegende Stufen 11 auf. Somit sind auf den jeweils gegenüberliegenden Seiten des Gehäuses 2 jeweils eine Aufnahme 12 ausgebildet, in denen jeweils ein Längsende 13 des Filterelements 3 angeordnet ist. Damit ist das Filterelement 3 durch Formschluss entlang einer mit einem Pfeil 14 angedeuteten Querrichtung fixiert. Entlang einer zur Querrichtung 14 senkrechten Längsrichtung weisen die Längsenden 13 des Filterelements 3 einen Abstand zum Gehäuse 2 auf. Die Endfixierung des Filterelements 3 in das die Endform 9 aufweisenden Gehäuse 2 ist bei der gezeigten Ausführungsform durch das Einspritzen eines Fixiermittels 15 realisiert. Hierzu weist das Gehäuse 2 an den Längsenden im Bereich der Aufnahmen 12 jeweils eine Einspritzöffnung 16 auf, die beispielsweise beim Endformen des Gehäuses 2 geformt sein können. Die Einspritzöffnungen 16 werden dazu benutzt, das Fixiermittel 15 in einen durch den Abstand zwischen dem Filterelement 3 bzw. den Längsenden 13 des Filterelement 3 und der jeweiligen Aufnahme 12 gebildeten Hohlraum 17 einzuspritzen.

Das Fixiermittel 15 ist vorzugsweise derart gewählt, dass es sich während oder nach dem Einspritzen in einen Schaum 18 verwandelt. Alternativ kann das Fixiermittel 15 auch ein Schaum 18 sein und in den Hohlraum 17 eingespritzt bzw. eingebracht werden. Somit handelt es sich beim Einspritzen des Fixiermittels 15 um ein Schäumverfahren. Hierzu wird das Fixiermittel 15 beispielsweise in den Längsenden 13 eines Rahmens 22 des Filterelements 3 eingeschäumt bis das Fixiermittel 15 den Hohlraum 17 gänzlich füllt. Damit ist das Filterelement 3 auch entlang der Querrichtung 14 im Gehäuse 2 endfixiert und der Hohlraum 17 zusätzlich abgedichtet. Durch das Einspritzen des Fixiermittels 15 in den Hohlraum 17 wird vorzugsweise auch die jeweilige Einspritzöffnung 16 geschlossen bzw. abgedichtet. Dadurch kann ein Fluid, welches mittels der Filtereinrichtung 1 gefiltert werden soll, ausschließlich durch das Filterelement 3 strömen und somit gefiltert bzw. gereinigt werden.

Das Fluid kann dabei durch die ursprünglich als Blasformöffnung 5 dienende Strömungsöffnung 10 in die Filtereinrichtung 1 hineinströmen und durch die gegenüberliegende Strömungsöffnung 10 aus dem Gehäuse 2 hinausströmen, wobei es das Filterelement 2 durchströmt und somit gereinigt wird. Eine der Strömungsöffnungen 10 ist somit ein Einlass 19 der Filtereinrichtung 1 während die andere Strömungsöffnung 10 ein Auslass 20 der Filtereinrichtung 1 ist.

Zum Filtern des Fluids weist das Filterelement 3 beispielsweise ein aus einem Vlies hergestelltes Filtermedium 21 auf, welches plissiert ist und innerhalb des Rahmens des Filterelements 3 angeordnet ist.

Das Gehäuse 2 der Filtereinrichtung 1 ist vorzugsweise aus Kunststoff, insbesondere aus Polypropylen, hergestellt. Zudem ist die Fixierung des Filterelements 2 in dem die Endform 9 aufweisenden Gehäuse 2 lösbar, so dass bei geöffnetem Gehäuse 2 das Filterelement 3 entnommen und getrennt von den Gehäuseteilen 2 entsorgt werden kann.

Das Filterelement 3 kann ebenfalls unlösbar am Gehäuse endfixiert sein, so dass die Filtereinrichtung 1 bei Bedarf als Ganzes auszutauschen ist.

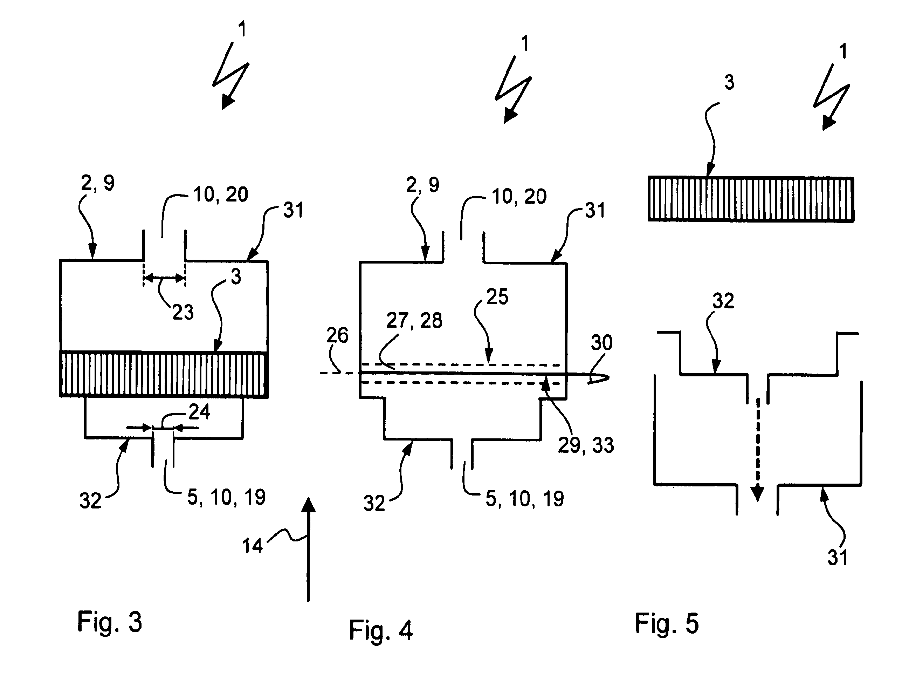

Auch die in den Fig. 3 bis 5 gezeigte Filtereinrichtung 1 ist aus der in Fig. 1 gezeigten Vorform 4, insbesondere durch Blasformen, hergestellt. Im Vergleich zur in Fig. 2 gezeigten Filtereinrichtung 1 wird hier das Filterelement 3 nach dem Einbringen in das die Vorform 4 aufweisende Gehäuse 2 nicht auf die Stufen 7 positioniert sondern lediglich im Gehäuse 2 festgelegt. Die in der Fig. 3 gezeigte Position des Filterelements 3 erfolgt im Anschluss an das Endformen des Gehäuses 2. Das Filterelement 3 wird also im die Endform 9 aufweisende Gehäuse 2 in Position gebracht, so dass es die in Fig. 3 gezeigte Position aufweist. Danach wird das Filterelement 3, beispielsweise mit Hilfe des Fixiermittels 15 am Gehäuse 2 endfixiert. Dies hat den Vorteil, dass das Filterelement 3 das möglicherweise heiße Gehäuse 2 erst nach dem Endformen und somit insbesondere nach dem Abkühlen kontaktiert.

Dabei weist die in den Fig. 3 bis 5 gezeigte Filtereinrichtung 1 keine den Stufen 7 gegenüberliegenden Stufen 11 auf, damit das Filterelement 3 im die Endform 9 aufweisenden Gehäuse 3 zur Positionierung bewegbar ist. Zudem weist die als Auslass 20 dienende Strömungsöffnung 20 einen Innendurchmesser 23 auf, der größer ist als ein Außendurchmesser 24 der als Einlass 19 dienenden Strömungsöffnung 10.

Wie bei der in Fig. 4 gezeigten Außenansicht zu sehen, ist wird in das Gehäuse 2 eine Sollbruchfunktion 25, beispielsweise während dem Endformen oder im Anschluss an das Endformen, ausgeformt bzw. eingearbeitet. Die Sollbruchfunktion 25 bewirkt einen Bruch des Gehäuses 2 entlang einer Sollbruchstelle 26, die im gezeigten Beispiel senkrecht zur Querrichtung 14 verläuft, wobei der Bruch durch eine beabsichtigte mechanische Einwirkung verursacht wird. Die Sollbruchfunktion 25 ist im gezeigten Beispiel als eine als Kerbe 27 geformte Ausnehmung 28 des Gehäuses 2 ausgebildet. Die Kerbe 27 verläuft entlang der Umfangsrichtung des Gehäuses 2 und umschließt das Gehäuse 2 zum Beispiel gänzlich, womit das Gehäuse 2 entlang der Kerbe 27 eine verdünnte Wandstärke ausweist.

Bei der gezeigten Ausführungsform erfolgt die mechanische Einwirkung mit Hilfe eines als Band 29 ausgebildeten Sollbruchelements 33 der Sollbruchfunktion 25, das mittig in der Kerbe 27 angeordnet ist und die Kerbe 27 vorzugsweise gänzlich füllt, so dass es die verdünnte Wandstäke des Gehäuses 4 zumindest teilweise ausgleicht. Das Band 29 ist beispielsweise aus Kunststoff hergestellt und ragt an einem Ende 30 aus der Kerbe 27 heraus. Dieses Ende 30 des Bands 29 kann bei Bedarf dazu genutzt werden, das Band 29 mit der Hand oder durch eine geeignete Einrichtung, insbesondere durch ein geeignetes Werkzeug, aus der Kerbe 27 und somit vom Gehäuse 2 zu lösen. Dementsprechend entfällt der durch das Band 29 gegebene Ausgleich der Wandstärke und das Gehäuse 2 bricht entlang der Sollbruchstelle 26 auseinander. Zusätzlich kann der Bruch durch einen Schlag des Gehäuses 2 an einer Kante oder Ecke bewirkt werden. In beide Fällen aktiviert das Band 29 bzw. das Sollbruchelement 33 die Sollbruchfunktion 25. Ferner entstehen durch den Bruch des Gehäuses zwei Gehäuseteile 31, 32. Da die Sollbruchstelle 26 im Bereich des Filterelements 3, hier auch mittig und parallel zum Filterelement 3, verläuft, wird zusätzlich die Endfixierung des Filterelements 3 am Gehäuse 2 gelöst oder zumindest soweit abgeschwächt, dass das Herauslösen des Filterelement 3 problemlos möglich ist.

Damit kann das Filterelement 3 getrennt entsorgt werden. Ferner ist ein erster Gehäuseteil 31 des gebrochenen Gehäuses 2 größer als ein zweiter Gehäuseteil 32, des Gehäuses 2, wobei der erste Gehäuseteil 31 den Auslass 20 aufweist, der größer ist als der Einlass 19 des zweiten Gehäuseteils 32. Dementsprechende kann, wie in Fig. 5 gezeigt, der zweite Gehäuseteil 32 in den ersten Gehäuseteil 31 gesteckt werden, womit das durch die Entsorgung der Filtereinrichtung 1 anfallende Volumen des Abfalls verringert ist.

## Patentansprüche

1. Verfahren zur Herstellung einer Filtereinrichtung (1) mit einem Gehäuse (2) und einem Filterelement (3), wobei
- das Filterelement (3) während oder nach der Herstellung des Gehäuses (2) ins Gehäuse (2) eingebracht wird,
- Öffnungen (5, 6, 10, 16, 19, 20) des Gehäuses (2) nach dem Einbringen des Filterelements (3) so klein sind oder soweit verkleinert werden, dass das Filterelement (3) nach der Fertigstellung der Filtereinrichtung (1) nicht mehr als Ganzes aus dem Gehäuse (2) herausnehmbar ist, das Gehäuse (2) monolithisch hergestellt wird,
**dadurch gekennzeichnet dass**,
- das Gehäuse (2) der Filtereinrichtung (1) aus einem Rohling mittels Blasformen in eine Vorform (4) geformt wird, die eine Einsetzöffnung (6) aufweist, wobei ein Blasformmedium durch eine Blasformöffnung (5) in den Rohling eingebracht wird,
- das Filterelement (3) durch die Einsetzöffnung (6) hindurch in das die Vorform (4) aufweisende Gehäuse (2) eingesetzt wird,
- das Filterelement (3) am Gehäuse (2) festgelegt wird,
- das Gehäuse (2) mittels Blasformen in eine Endform (9) geformt wird, wobei das Blasformmedium durch diese Blasformöffnung (5) oder eine andere Blasformöffnung (5) in das Gehäuse (2) eingebracht wird.

2. Verfahren nach Anspruch 1,
**dadurch gekennzeichnet,**
**dass** das Filterelement (3) in dem die Endform (9) aufweisende Gehäuse (2) in Position gebracht und endfixiert wird.

3. Verfahren nach Anspruch 1 oder 2,
**dadurch gekennzeichnet,**
**dass** eine der Blasformöffnungen (5) die Einsetzöffnung (6) ist.

4. Verfahren nach einem der Ansprüche 1 bis 3,
**dadurch gekennzeichnet,**
**dass** das Filterelement (3) mittels Einspritzen eines Fixiermittels (15), am Gehäuse (2) fixiert und/oder abgedichtet wird.

5. Verfahren nach einem der Ansprüche 1 bis 4,
**dadurch gekennzeichnet,**
**dass** eine Sollbruchfunktion (25) in das Gehäuse (2) eingearbeitet oder ausgeformt wird, welche durch eine mechanische Einwirkung einen Bruch des Gehäuses (2) an oder entlang einer Solbruchstelle (26) verursacht.

6. Verfahren nach Anspruch 5,
**dadurch gekennzeichnet,**
**dass** die Sollbruchstelle (26) entlang einer Querrichtung (14) vom Filterelement (3) beabstandet ist.

7. Verfahren nach Anspruch 5 oder 6,
**dadurch gekennzeichnet,**
**dass** durch den Bruch des Gehäuses (2) zwei Gehäuseteile (31, 32) entstehen, die ineinander steckbar sind.

8. Verfahren nach einem der Ansprüche 5 bis 7,
**dadurch gekennzeichnet,**
**dass** die Sollbruchfunktion (25) eine Kerbe (27) aufweist.

9. Verfahren nach einem der Ansprüche 5 bis 8,
**dadurch gekennzeichnet,**
**dass** ein Sollbruchelement (33), insbesondere ein Band (29), die Sollbruchfunktion (25) aktiviert.

10. Verfahren nach einem der Ansprüche 1 bis 9,
**dadurch gekennzeichnet,**
**dass** die Filtereinrichtung (1) derart hergestellt wird, das das die Endform (9) aufweisende Gehäuse (2) zumindest eine Strömungsöffnung (10), insbesondere zwei solche Strömungsöffnungen (10), aufweist.

11. Verfahren nach Anspruch 10,
**dadurch gekennzeichnet,**
**dass** zumindest eine der Öffnungen (5, 6, 10, 16, 19, 20) zu einer solchen Strömungsöffnung (10) umgeformt wird.

## Claims

1. Method for producing a filter device (1) which comprises a housing (2) and a filter element (3),
- the filter element (3) being introduced into the housing (2) either during or after production of the housing (2),
- once the filter element (3) has been introduced, openings (5, 6, 10, 16, 19, 20) in the housing (2) being so small or reduced in size to such an extent that the filter element (3) can no longer be removed as a whole from the housing (2) once the filter device (1) has been produced,
- the housing (2) being produced as a monolith,
**characterised in that**
- the housing (2) of the filter device (1) is moulded into a blank mould (4), which has an insertion opening (6), from a blank by means of blow moulding, a blow-moulding medium being introduced into the blank through a blow-moulding opening (5),
- the filter element (3) is inserted into the housing (2) comprising the blank mould (4) through the insertion opening (6),
- the filter element (3) is fixed to the housing (2),
- the housing (2) is moulded into a final mould (9) by means of blow moulding, the blow-moulding medium being introduced into the housing (2) through said blow-moulding opening (5) or another blow-moulding opening (5).

2. Method according to claim 1, **characterised in that** the filter element (3) is positioned in the housing (2) comprising the final mould (9) and is fixed in its final position.

3. Method according to either claim 1 or claim 2, **characterised in that** one of the blow-moulding openings (5) is the insertion opening (6).

4. Method according to any of claims 1 to 3, **characterised in that** the filter element (3) is fixed to and/or sealed against the housing (2) by injection moulding a fixing agent (15).

5. Method according to any of claims 1 to 4, **characterised in that** a predetermined breaking feature (25) is incorporated or moulded into the housing (2) and causes the housing (2) to break at or along a predetermined breaking point (26) as a result of a mechanical action.

6. Method according to claim 5, **characterised in that** the predetermined breaking point (26) is spaced apart from the filter element (3) in a transverse direction (14).

7. Method according to either claim 5 or claim 6, **characterised in that** two housing parts (31, 32) form as a result of the housing (2) breaking and can be inserted into one another.

8. Method according to any of claims 5 to 7, **characterised in that** the predetermined breaking feature (25) has a notch (27).

9. Method according to any of claims 5 to 8, **characterised in that** a predetermined breaking element (33), in particular a strip (29), activates the predetermined breaking feature (25).

10. Method according to any of claims 1 to 9, **characterised in that** the filter device (1) is produced in such a way that the housing (2) comprising the final mould (9) comprises at least one flow opening (10), in particular two such flow openings (10).

11. Method according to claim 10, **characterised in that** at least one of the openings (5, 6, 10, 16, 19, 20) is shaped to form such a flow opening (10).

## Revendications

1. Procédé de fabrication d'un dispositif filtrant (1) avec un boîtier (2) et un élément filtrant (3), dans lequel
- l'élément filtrant (3) est mis en place dans le boîtier (2) pendant ou après la fabrication du boîtier (2),
- des ouvertures (5, 6, 10, 16, 19, 20) du boîtier (2) sont, après la mise en place de l'élément filtrant (3), si petites ou réduites au point que l'élément filtrant (3), après l'achèvement du dispositif filtrant (1), ne peut plus être enlevé du boîtier (2) en tant qu'ensemble,
- le boîtier (2) est fabriqué de façon monolithique,
**caractérisé en ce que**
- le boîtier (2) du dispositif filtrant (1) est, à partir d'une ébauche, formé au moyen du moulage par soufflage en une préforme (4) qui présente une ouverture d'introduction (6), un agent de moulage par soufflage étant mis en place dans l'ébauche à travers une ouverture de moulage par soufflage (5),
- l'élément filtrant (3) est introduit à travers l'ouverture d'introduction (6) dans le boîtier (2) présentant la préforme (4),
- l'élément filtrant (3) est immobilisé sur le boîtier (2),
- le boîtier (2) est, par moulage par formage, formé en une forme finale (9), l'agent de moulage par soufflage étant mis en place dans le boîtier (2) à travers cette ouverture de moulage par soufflage (5) ou une autre ouverture de moulage par soufflage (5).

2. Procédé selon la revendication 1,
**caractérisé en ce que**
l'élément filtrant (3) est mis en position et fixé de façon définitive dans le boîtier (2) présentant la forme finale (9).

3. Procédé selon la revendication 1 ou 2,
**caractérisé en ce qu'**une
des ouvertures de moulage par soufflage (5) est l'ouverture d'introduction (6).

4. Procédé selon l'une des revendications 1 à 3,
**caractérisé en ce que**
l'élément filtrant (3) est fixé et/ou scellé sur le boîtier (2) au moyen de l'injection d'un produit de fixation (15).

5. Procédé selon l'une des revendications 1 à 4,
**caractérisé en ce qu'**une
fonction de rupture programmée (25) est intégrée ou conformée dans le boîtier (2), laquelle provoque, par une action mécanique, une rupture du boîtier (2) sur ou le long d'un emplacement de rupture programmée (26).

6. Procédé selon la revendication 5,
**caractérisé en ce que**
l'emplacement de rupture programmée (26) est espacé de l'élément filtrant (3) le long d'une direction transversale (14).

7. Procédé selon la revendication 5 ou 6,
**caractérisé en ce que**
la rupture du boîtier (2) crée deux parties de boîtier (31, 32) qui sont enfichables l'une dans l'autre.

8. Procédé selon l'une des revendications 5 à 7,
**caractérisé en ce que**
la fonction de rupture programmée (25) présente une entaille (27).

9. Procédé selon l'une des revendications 5 à 8,
**caractérisé en ce**
**qu'**un élément de rupture programmée (33), en particulier une bande (29), active la fonction de rupture programmée (25).

10. Procédé selon l'une des revendications 1 à 9,
**caractérisé en ce que**
le dispositif filtrant (1) est fabriqué de telle sorte que le boîtier (2) présentant la forme finale (9) présente au moins une ouverture d'écoulement (10), en particulier deux telles ouvertures d'écoulement (10).

11. Procédé selon la revendication 10,
**caractérisé en ce**
**qu'**au moins une des ouvertures (5, 6, 10, 16, 19, 20) est conformée en une telle ouverture d'écoulement (10).
